# EUROPEAN PATENT SPECIFICATION

(11) **EP 1 492 664 B1**
(45) Date of publication and mention of the grant of the patent: **24.01.2007**
(21) Application number: 03721180.2
(22) Date of filing: 07.04.2003
(51) Int. Cl.: B32B 7/02

(54) **LIGHTWEIGHT ANTIBALLISTIC PANEL AND METHOD FOR MAKING SUCH PANEL**
LEICHTE ANTIBALLISTISCHE PLATTE UND VERFAHREN ZUR HERSTELLUNG EINER SOLCHEN PLATTE
PANNEAU ANTIBALISTIQUE LEGER ET SON PROCEDE DE FABRICATION

(30) Priority: 05.04.2002 NO 20021643
(43) Date of publication of application: 05.01.2005
(73) Proprietor: Frec Thermoplastics AS, 1608 Frederikstad (NO)
(72) Inventor: HANSEN, Pal, Francis, N-1326 Lysaker (NO); PETTERSEN, Bjorn, N-1671 Krakeroy (NO)
(74) Representative: Haley, Stephen
(86) International application number: PCT/NO2003/000112
(87) International publication number: WO 2003/086748

(56) References cited:
- WO-A-01/59395
- WO-A1-00/61435
- WO-A1-99/22195

## Description

This invention relates to lightweight ballistic protection. More specifically it relates to the construction of fiber armour plates to stop projectiles from firing weapons, for instance pistols, guns, or splinters from grenades and mines.

Ballistic protection or so-called antiballistic panels are today made of artificial fiber cloths such as aramid, dynema, nylon in textile woven "dry" cloths of for instance aramid without matrix material between the fibers, where the cloths are pressed together under high pressure with intermediate glue or thermoplastic during heating to form panels or plates. There is a minimal consumption of glue between the cloths in order to obtain the antiballistic properties. Fibers that have a high fracture strength shall be able to slide in relation to each other in order to follow the projectile that is heading into the cloth and attempts to penetrate the panel completely of which the cloth constitutes a part. In this manner the fiber will cling to the penetrating projectile and absorb as much energy as possible from the projectile, such that the velocity of the projectile is reduced.

PCT/US01/01945 "Multilayered ballistic restraint article" describes antiballistic devices in which fiber cloths have a unidirectional fiber direction, and that several such cloths are laid having a mutual angle of less than 45 degrees, thereby increasing the energy taken from an incoming projectile. At page 10 of the cited application is described that antiballistic cloths may be arranged outside ceramic hard armour in order to protect this. From the detailed description one may see that this is opposite of the present invention. The specific sequence of antiballistic cloths and ceramic armour is not indifferent in our experiments, and it will emerge from the below written that the present invention has a different layup and provides advantages with respect to the cited international patent application.

PCT/US00/07356 "Ballistic resistant panel and method of making" describes an antiballistic laminate which comprises a non-woven first layer having multidirectional fibers, a first laminate film attached to a first side of the non-woven first layer, and a second laminate film attached to the opposite side of the non-woven first laminate like a kind of sandwich. At least two such sandwich-packages are comprised in the antiballistic laminate, which is thus built from double pairs of laminate films, which appears unnecessary, and which complicates the buildup and production of the antiballistic laminate, and in which the amount of laminate film is high and thus reduces the antiballistic properties.

EP0251395 "Armour plate" describes a multilayer armour plate having a front side with ceramic tiles on the outside of several layers of metal plates, with fiber reinforced plastic laminate on the rear side. It is utilized that the incoming projectile's spearhead is crushed upon hitting the ceramic tile surface and thus increases the front area. Thus the penetration ability of the spearhead is somewhat reduced. It is claimed in the cited EP publication that separate ceramic fragments formed after a hit may tear apart and destroy armour fibers. This is not considered as an essential problem with respect to the present invention. The use of aramide fibers are mentioned, but the sequence comprising metal plates directly behind the ceramic tiles is in direct contradiction to the present invention.

PCT/US98/22401 "armor material and methods of making same" describes a steel or ceramic antiballistic cores being covered or impregnated by resin material. In the process for the production is used vacuum injection of vinyl ester resin material in a so-called "resin transfer molding". Kevlar fibers are glued to the rear side of the core of metal or ceramic material. In the present invention no such metallic or ceramic core is used.

DE 2359122 describes steel- ceramic and synthetic laminated armour plates.

SE 470340 describe a composite panel for protection against projectiles or splinters, with a large number of woven fibers having different mesh and thereby different specific area weights, in which the layers are directed in different directions and mutually displaced.

Several of the prior art panels do not have the structural strength and do not withstand humidity, sunlight and mechanical wear, and must be protected against these external influences, and hence therefore cannot be used as a completely or a partially self-supporting construction. In order to be used as a complete or a partially self-supported construction, the amount of matrix would have to be increased to 50%, and would reduce the ballistic protection significantly, so that in practical terms it would not achieve any antiballistic effect, with exception of very thick and thus also very heavy and expensive panels made from aramid cloths.

Panels as mentioned above are at present used in combination with structural elements from steel plates, aluminum plates or plastic panels, both in civilian and military light units such as cars, aircrafts, helicopters and lightweight buildings. The antiballistic panel is glued or taped or fastened with fastening brackets to the structural elements. This is very time consuming and often requires dismantling the chassis parts in the vehicle that is going to be provided with ballistic protection.

In an attempt to use the Scrimp method to vacuum inject a liquid matrix into a structural element of armour fibers, and at the same time desire to make a construction of antiballistic cloths, the only achievement is that the liquid matrix impregnates the antiballistic cloths and destroys the antiballistic properties of these.

According to a first aspect of the invention, there is provided an antiballistic panel comprising:
a structural bottom plate made of a thermoplastic material containing reinforcing fibres;
a plurality of layers of antiballistic armour cloth; and
a structural top plate made of a thermoplastic material containing reinforcing fibres,
characterised in that the panel further comprises:
   intermediate adhesive thermoplastic foils or nets alternated with, and bonding, the layers of antiballistic armour cloth, the intermediate adhesive thermoplastic foils or nets constituting less than 20% of the combined weight of the intermediate adhesive thermoplastic foils or nets and the antiballistic armour cloth;
   a first adhesive sealing foil provided between the structural bottom plate and the plurality of layers of antiballistic armour cloth, the first adhesive foil being made of a thermoplastic material which is substantially unmixable with the thermoplastic material from which the structural bottom plate is made; and
   a second adhesive sealing foil provided between the plurality of layers of antiballistic armour cloth and the structural top plate, the second adhesive foil being made of a thermoplastic material which is substantially unmixable with the thermoplastic material from which the structural top plate is made.

According to a second aspect of the invention, there is provided a method of producing an antiballistic panel comprising the steps of:
arranging at least one first thermoplastic cloth with reinforcing fibres in a mould the or each first thermoplastic cloth comprising a thermoplastic material;
arranging a first adhesive sealing foil over the at least one cloth, the first adhesive foil being made of a thermoplastic material which is substantially unmixable with the thermoplastic material of the thermoplastic cloth;
arranging alternating layers of antiballistic armour cloth and intermediate adhesive thermoplastic foils or nets over the first adhesive sealing foil, the intermediate adhesive thermoplastic foils or nets constituting less than 20% of the combined weight of the intermediate adhesive thermoplastic foils or nets and the antiballistic armour cloth;
arranging a second adhesive sealing foil over the plurality of layers of antiballistic armour cloth, the second adhesive foil being made of a thermoplastic material; and
arranging at least one second thermoplastic cloth with reinforcing fibres over the second sealing foil, the or each second thermoplastic cloth comprising a thermoplastic material with which the thermoplastic material of the second adhesive sealing foil is substantially unmixable,
so as to form a complete arrangement in the mould,
the method comprising the further steps of:
   arranging a vacuum bag over the complete arrangement and evacuating the complete arrangement;
   baking the complete arrangement such that:
      the thermoplastic material of the at least one first thermoplastic cloth melts and impregnates the reinforcing fibres arranged therewith to form a structural bottom plate;
      the thermoplastic material of the at least one second thermoplastic cloth melts and impregnates the reinforcing fibres arranged therewith to form a structural top plate; and
      the intermediate adhesive thermoplastic foils or nets melt to bond the layers of antiballistic armour cloth; and
      cooling the complete arrangement such that the thermoplastic in the structural bottom plate and the structural top plate is hardened and bonds the respective reinforcing fibres,
      so as to consolidate the complete arrangement.

The invention and prior art illustrated in the attached figures shall not be interpreted to limit the scope of the invention.

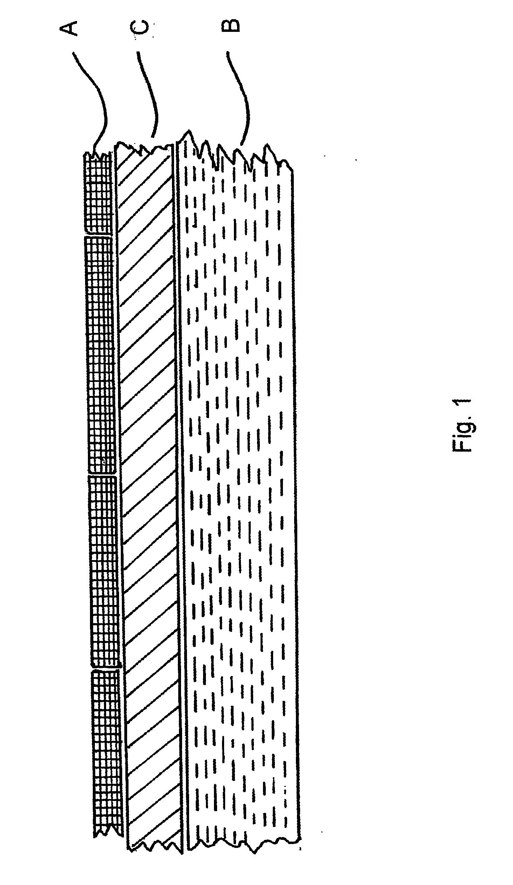

Figure 1 shows prior art with the present construction of antiballistic panels with three separate elements that must be attached or glued together to obtain structural strength and the desired antiballistic properties; a structural supporting construction of steel, aluminum, composite materials, wood, plastic, or similar; an antiballistic panel made of for instance aramid based sandwiched fibers and a bonding matrix in between; and a protective construction of for instance steel, aluminium, composite materials, wood or plastic.

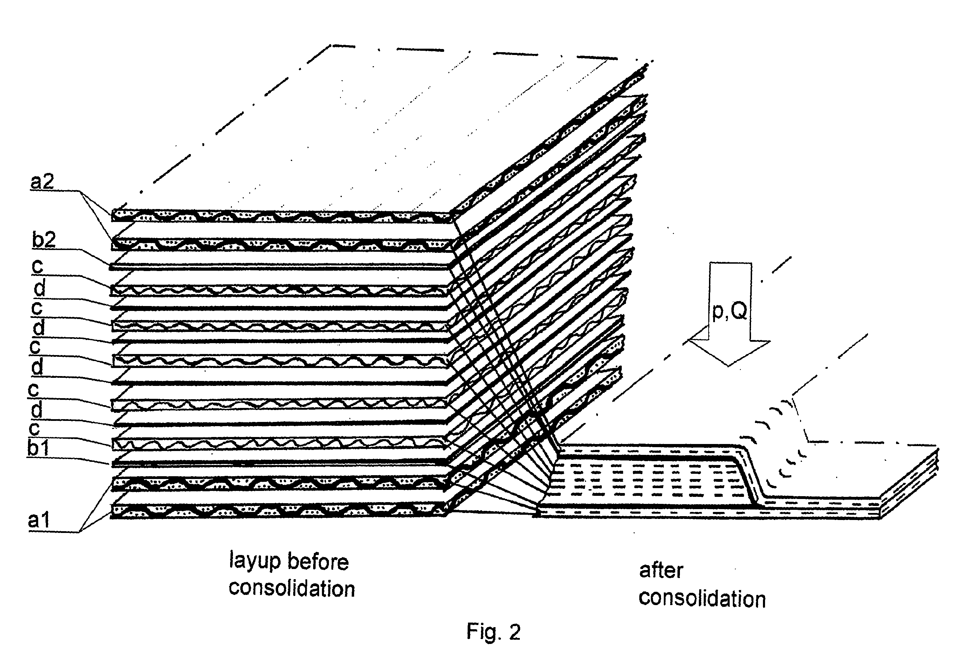

Figure 2 shows the basic embodiment of the invention with a package or a "layup" that is baked into one structural panel with antiballistic properties.

Simple tests show that 20% resin or glue in a such aramid based panel, makes it being almost penetrated by a projectile, while 15% resin provides better ballistic protection and 12% resin provides for even better capability to withstand penetration by a projectile. The aramid cloths from which the panel has been attempted to be constructed typically has a weight of 300 g/m², and a portion of glue of 45 g/m² which constitutes 15% matrix, arranged as a binder between the aramid cloths.

Figure 3 shows a further development of the invention where the antiballistic protection is comprising a material with a high hardness made of for instance ceramics on the projectile receiving side, and a hardened metal made of for instance armour steel behind the bottom plate. The bottom plate may be replaced with the armour steel plate.

Figure 4 illustrates a preferred embodiment of the inventions method with vacuum moulding of a three dimensional structural and ballistic protective component, for instance a vehicle, where the method uses a mould and a vacuum bag.

Figure 5 illustrates a preferred embodiment of the invention, where the composite based antiballistic materials are moulded outside a construction of for instance steel with the help of vacuum and/or heat.

Figure 6a and Figure 6b are photographical representations of an experimental test piece of a preferred embodiment according to the invention where a rifle was used for a test firing having a projectile of 7,62 mm with a firing distance of 5 meters.

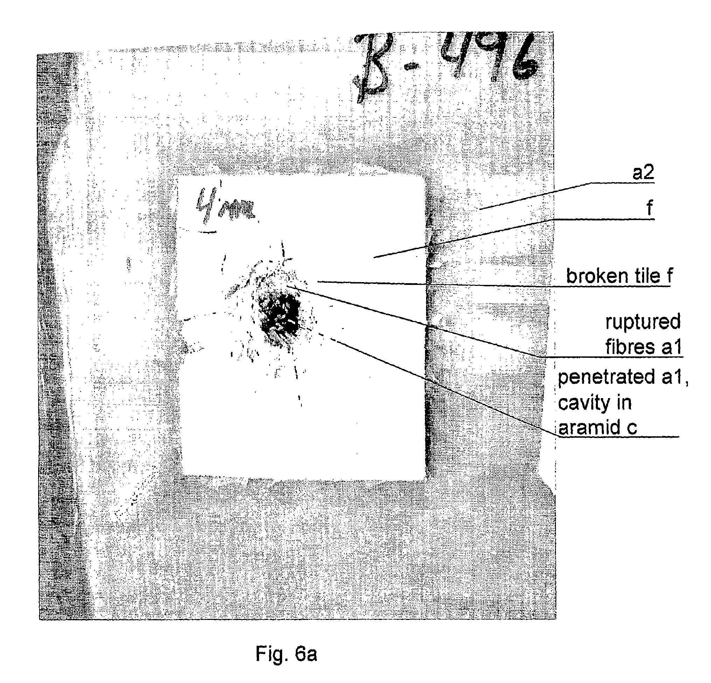

Figure 6a shows the outwardly facing surface of the laminate and shows the impact wound in the thin thermoplastic skin, and a destruction zone through a ceramic tile underneath the thermoplastic skin, and then penetration of the thermoplastic reinforced glass fiber, and a cavity in the aramid prominent layers.

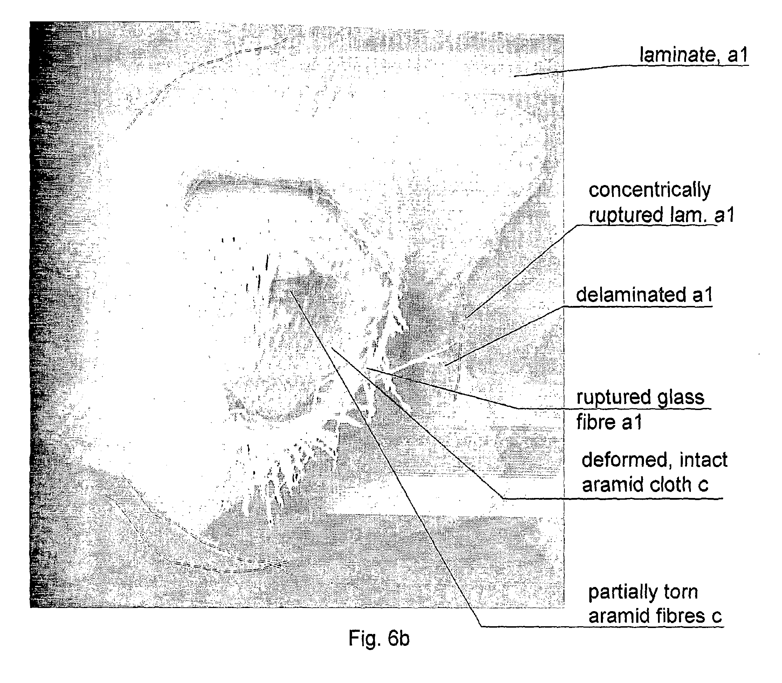

Figure 6b shows the backside of the same experimental test piece, and shows, considered from the outside to the inside:
* undamaged laminate in the structural bottom plate,
* near to concentric ruptured fiber reinforced thermoplastic composite in the bottom plate, where the glass fibers are intact,
* delaminated glass fiber composite,
* ruptured glass fiber from glass composite,
* deformed but intact aramid cloth, and
* and partially torn aramid fibers on the inside, but not penetrated by the projectile.

Figure 1 illustrates prior art with the present construction of antiballistic panels with three separate elements A, B and C that must be assembled or glued together in order to obtain structural strength and the desired antiballistic properties: a structural supporting construction C of steel, aluminium, composite material, wood, plastic or similar; an antiballistic panel B with for instance aramid based composite with sandwiched fiber layers and bonding matrix between; and a protective construction A made of for instance steel, aluminium, composite, wood or plastic.

Figure 2 shows the construction and an integrated strength- and antiballistic panel according to the invention. The antiballistic panel is characterized by the following features in its construction:

At the rear there is arranged at least one structural bottom plate (a1) made of for instance thermoplastic made of PP, PET or similar, and with reinforcing fibers of glass fiber, carbon fiber, aramid fibers or similar.

On the bottom plate there is arranged a first, underlying foil (b1) which is bonding, by being adhesive, that at the same time functions as a sealing film from thermoplastic or similar that substantially is not mixable with the thermoplastic of the structural bottom plate (a1).

On top of the first underlying adhesive sealing foil (b1) there is arranged at least two or more antiballistic, generally matrix free armour fiber cloths (c) alternating with intermediate adhesive foils or thermoplastic foils / thermoplastic net (d) sufficiently adhesive, having less than 20 weight % matrix material relative to the reinforcing fiber cloths.

Outside the layer of the antiballistic cloths an overlaying adhesive sealing foil is placed (b2) of thermoplastic or similar that is substantially not mixable with the thermoplastic of other structural top plate (will be described below, a2). In this manner it is avoided that thermoplastic from the matrix material from the overlaying top plate penetrates into the antiballistic cloths and deteriorates the antiballistic properties when increasing the matrix content.

The at least one other structural top plate (a2) comprises for instance fiber reinforced thermoplastic (PP, PET or similar) with reinforcing fibers (glass fiber, carbon fiber, aramid fiber or similar).

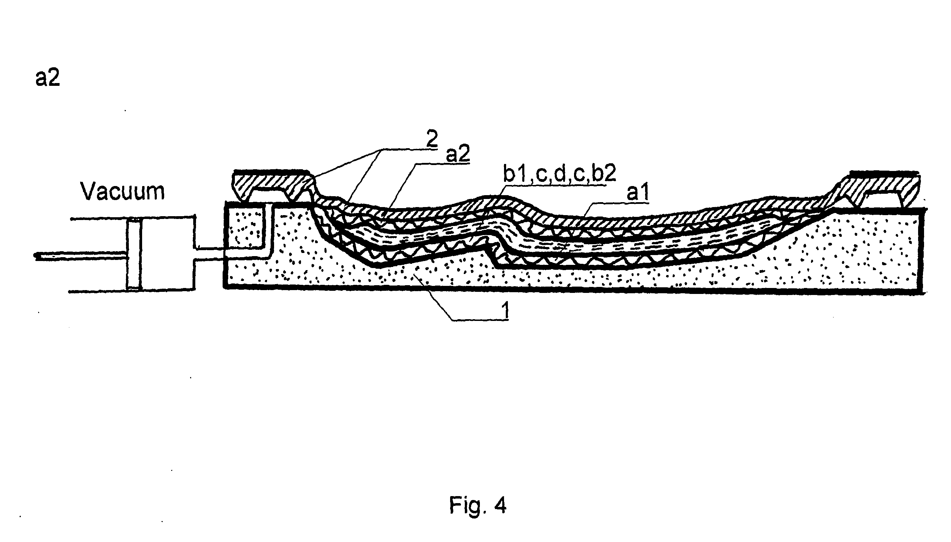

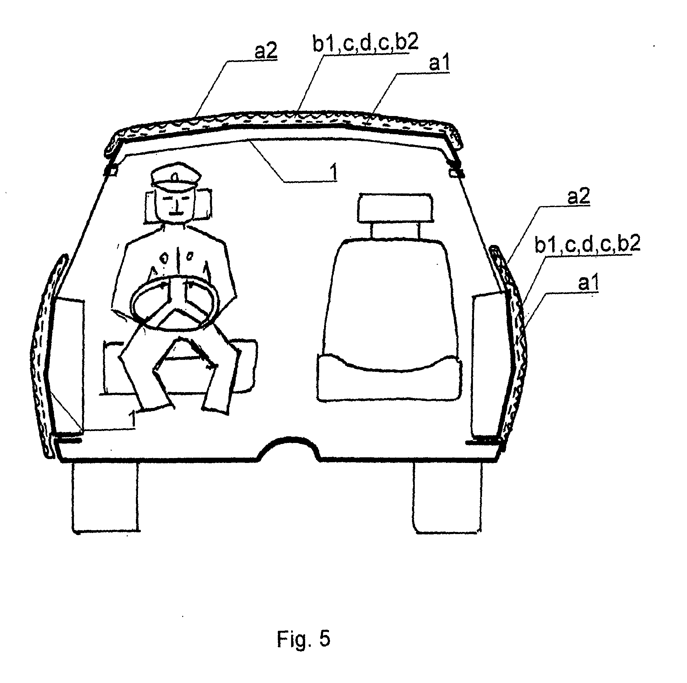

Figure 4 illustrates how the complete arrangement ("layup") (a1, b1, c , d, ..., c, b2, c2) is consolidated by being baked underneath a vacuum bag (2) in a mould (1) or on an another desired surface (1'), for instance a chassis part, see Figure 5, in an oven or otherwise heated until the thermoplastic of the bottom plate (a1) and the top plate (a2) melts and fills the reinforcing fiber, and does not impregnate the antiballistic fibers (c) of the cloths due to the sealing foil (b1, b2), and at the same time the intermediate adhesive foils or thermoplastic foil / thermoplastic net (d) melts and bonds the antiballistic cloths (c) to the desired degree. The chassis part that alternatively is used as a mould, shown in Figure 5, may in a relevant embodiment for instance be a car hood, a front car door or passenger door, a trunk lid or a bottom plate for car.

In a preferred embodiment of the invention there is less than 15% adhesive glue or thermoplastic in the layers of antiballistic fiber cloths, something that will increase the antiballistic effect. In a further preferred embodiment there is less than 12% adhesive glue or thermoplastic in the layup with the antiballistic cloths, something that will further increase the antiballistic effect.

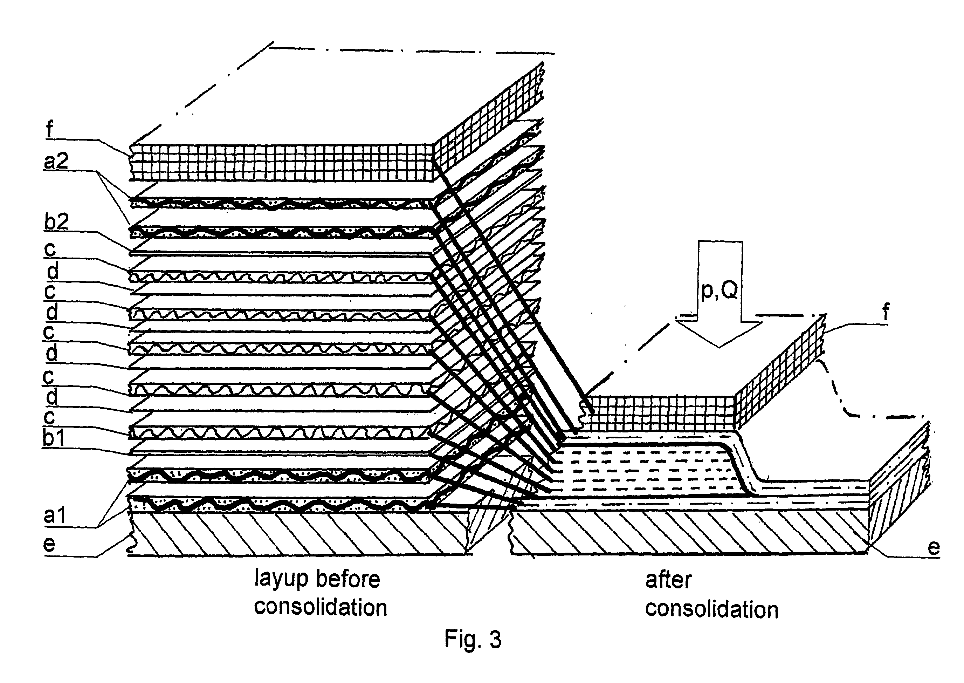

In a preferred embodiment according to the invention, shown in Figure 3, there is a least one layer of ceramic material (f) outside the other structural top plate (a2). This ceramic material will contribute to crushing and propagation of the spearhead of an approaching projectile such that the projectile, when it hits the fibers of the antiballistic cloth, will have a greater and partially ruptured attack surface that is more easily engaged and inhibited in its movement of several of the antiballistic cloths fibers, than if the ceramic material not had been used to crush the spearhead. In a possible embodiment of the invention, also shown in Figure 3, at least one layer of armour(s), preferably armour steel or another hardened steel, may be applied behind the structural bottom plate (a1). This may be accomplished by gluing or otherwise fasten a panel produced according to the invention directly onto the armour steel. The armour steel will prevent penetration of the projectile in its deformed condition after it has reduced its kinetic energy by the antiballistic plates. In a preferred embodiment of the invention armour steel is used, as illustrated, behind the layup of antiballistic fibers, at the same time as outside ceramic plates are used in front of the antiballistic fibers.

Alternatively, at least one layer of ceramic material (f) may be arranged on the surface of the antiballistic, mainly matrix-free fiber reinforced cloths, below the second, structural top plate (a2).

As an alternative embodiment to the first underlying adhesive sealing foil, paper may be used, or high temperature resistant foil, that is perforated with wide separation between the holes, i.e. with separation between the holes in the paper or the foil, to allow for penetration of thermoplastic to a lesser degree, that however obtains scattered fastening points for the antiballistic cloths to the bottom plate.

Figure 6a and Figure 6b are photographical representations of an experimental test piece of a preferred embodiment according to the invention where a rifle was used for a firing test having a projectile of 7,62 mm with a firing distance of 5 meters.

Figure 6a shows the outwardly facing surface of the laminate and shows the impact wound in the thin thermoplastic skin, and a destruction zone through a ceramic tile (f) underneath the thermoplastic skin, and then penetration of the thermoplastic reinforced glass fiber (a2), and a cavity in the aramid prominent layers (c,d,c,d, ..., c).

Figure 6b shows the backside of the same experimental test piece, and shows, considered from the outside to the inside:
* undamaged laminate in the structural bottom plate (a1),
* near to concentric ruptured fiber reinforced thermoplastic composite in the bottom plate (a1), where the glass fibers are intact,
* delaminated glass fiber composite (a1),
* ruptured glass fiber from glass composite (a1),
* deformed but intact aramid cloth (c), and
* and partially torn aramid fibers (c) on the inside, but not penetrated by the projectile.

As an alternative embodiment to the structural bottom made fiber reinforced thermoplastic, a steel plate or aluminium plate may be used where the first adhesive foil only shall attach the antiballistic fiber armour cloths to the bottom plate. The structural bottom plate can then function, as a mould wherein the antiballistic layers and the outer placed composite material is vacuum melted underneath a vacuum bag.

In a possible embodiment a lightweight antiballistic protection for a car is produced by forming antiballistic panels according to the invention, adjusted to be mounted and cover at least the upper parts of a front engine hood and if possible a lower part of the front screen of a vehicle. Further protection is obtained by mounting the panels according the invention on the side doors at the front of the vehicle, and also if possible covering up to the shoulder height of the driver and possibly any passengers in the front. In this manner a light vehicle can be covered in the front and the sides with very light composite laminate arranged outside the vehicle instead of building it inside the outer plates of the vehicle. Further antiballistic panels according to the invention may be placed behind the seats in the vehicle, such that at least the driver is covered from shots from the rear.

## Claims

1. An antiballistic panel comprising:
a structural bottom plate (a1) made of a thermoplastic material containing reinforcing fibres;
a plurality of layers of antiballistic armour cloth (c); and
a structural top plate (a2) made of a thermoplastic material containing reinforcing fibres,
**characterised in that** the panel further comprises:
intermediate adhesive thermoplastic foils or nets (d) alternated with, and bonding, the layers of antiballistic armour cloth, the intermediate adhesive thermoplastic foils or nets constituting less than 20% of the combined weight of the intermediate adhesive thermoplastic foils or nets and the antiballistic armour cloth;
a first adhesive sealing foil (b1), provided between the structural bottom plate and the plurality of layers of antiballistic armour cloth, the first adhesive foil being made of a thermoplastic material which is substantially unmixable with the thermoplastic material from which the structural bottom plate is made; and
a second adhesive sealing foil (b2), provided between the plurality of layers of antiballistic armour cloth and the structural top plate, the second adhesive foil being made of a thermoplastic material which is substantially unmixable with the thermoplastic material from which the structural top plate is made.

2. An antiballistic panel according to claim 1, wherein the thermoplastic material comprises PP or PET.

3. An antiballistic panel according to claim 1 or claim 2, wherein the reinforcing fibres are made of glass, carbon or an aramid.

4. An antiballistic panel according to claim 1, comprising at least one layer of ceramic material (f) disposed on the top of the structural top plate (a2).

5. An antiballistic panel according to claim 1, comprising at least one layer of armour (e) disposed on the bottom of the structural bottom plate (a1).

6. An antiballistic panel according to claim 5, wherein the at least one layer of armour (e) comprises armour steel or hardened steel.

7. An antiballistic panel according to claim 1, comprising at least one layer of ceramic material (f) disposed between the plurality of layers of antiballistic armour cloth and the structural top plate.

8. A car comprising front side doors and an engine hood, the car having antiballistic panels covering at least upper parts of the engine hood and the front side doors, each antiballistic panel according to claim 1.

9. A method of producing an antiballistic panel comprising the steps of:
arranging at least one first thermoplastic cloth with reinforcing fibres in a mould (1), the or each first thermoplastic cloth comprising a thermoplastic material;
arranging a first adhesive sealing foil (b1) over the at least one cloth, the first adhesive foil being made of a thermoplastic material which is substantially unmixable with the thermoplastic material of the thermoplastic cloth;
arranging alternating layers of antiballistic armour cloth (c) and intermediate adhesive thermoplastic foils or nets (d) over the first adhesive sealing foil, the intermediate adhesive thermoplastic foils or nets constituting less than 20% of the combined weight of the intermediate adhesive thermoplastic foils or nets and the antiballistic armour cloth;
arranging a second adhesive sealing foil (b2) over the plurality of layers of antiballistic armour cloth, the second adhesive foil being made of a thermoplastic material; and
arranging at least one second thermoplastic cloth with reinforcing fibres over the second sealing foil, the or each second thermoplastic cloth comprising a thermoplastic material with which the thermoplastic material of the second adhesive sealing foil is substantially unmixable,
so as to form a complete arrangement in the mould,
the method comprising the further steps of:
arranging a vacuum bag (2) over the complete arrangement and evacuating the complete arrangement;
baking the complete arrangement such that:
the thermoplastic material of the at least one first thermoplastic cloth melts and impregnates the reinforcing fibres arranged therewith to form a structural bottom plate (a1);
the thermoplastic material of the at least one second thermoplastic cloth melts and impregnates the reinforcing fibres arranged therewith to form a structural top plate (a2); and
the intermediate adhesive thermoplastic foils or nets melt to bond the layers of antiballistic armour cloth; and
cooling the complete arrangement such that the thermoplastic in the structural bottom plate (a1) and the structural top plate (a2) is hardened and bonds the respective reinforcing fibres,
so as to consolidate the complete arrangement.

10. A method according to claim 9, further comprising the step of depositing at least one layer of ceramic material (f) on the top of the structural top plate (a2).

11. A method according to claim 9, further comprising the step of depositing at least one layer of armour (e) on the bottom of the structural bottom plate (a1).

12. A method according to claim 11, wherein the step of depositing at least one layer of armour (e) comprises depositing at least one layer of armour steel or hardened steel.

13. A method according to claim 9, further comprising the step of arranging at least one layer of ceramic material (f) over the alternating layers of antiballistic armour cloth (c) and intermediate adhesive thermoplastic foils or nets (d), prior to arranging the at least one second thermoplastic cloth with reinforcing fibres over the second sealing foil (b2).

## Patentansprüche

1. Antiballistische Platte, die aufweist:
eine Baubodenplatte (a1), hergestellt aus einem thermoplastischen Material, das Verstärkungsfasern enthält;
eine Mehrzahl Schichten eines antiballistischen Bewehrungsgewebes (c); und
eine Bauoberseitenplatte (a2), hergestellt aus einem thermoplastischen Material, das Verstärkungsfasern enthält;
**dadurch gekennzeichnet, dass** die Platte weiterhin aufweist:
thermoplastische Zwischenklebefolien oder -netze (d), die sich mit den Schichten des antiballistischen Bewehrungsgewebes abwechseln und diese verbinden, wobei die thermoplastischen Zwischenklebefolien oder -netze weniger als 20 % des kombinierten Gewichts der thermoplastischen Zwischenklebefolien oder -netze und des antiballistischen Bewehrungsgewebes bilden;
eine erste Klebedichtfolie (b1), die zwischen der Baubodenplatte und der Mehrzahl der Schichten des antiballistischen Bewehrungsgewebes vorgesehen ist, wobei die erste Klebefolie aus einem thermoplastischen Material gebildet ist, das im Wesentlichen nicht mit dem thermoplastischen Material mischbar ist, aus dem die Baubodenplatte gebildet ist; und
eine zweite Klebedichtfolie (b2), die zwischen der Mehrzahl der Schichten aus antiballistischem Bewehrungsgewebe und der Bauoberseitenplatte vorgesehen ist,
wobei die zweite Klebefolie aus einem thermoplastischen Material gebildet ist, das im Wesentlichen nicht mit dem thermoplastischen Material mischbar ist, aus dem die Bauoberseitenplatte hergestellt ist.

2. Antiballistische Platte nach Anspruch 1, wobei das thermoplastische Material PP oder PET aufweist.

3. Antiballistische Platte nach Anspruch 1 oder Anspruch 2, wobei die Verstärkungsfasern aus Glas, Kohlenstoff oder einem Aramid gebildet sind.

4. Antiballistische Platte nach Anspruch 1, die mindestens eine Schicht aus einem keramischen Material (f) aufweist, die auf der Oberseite der Bauoberseitenplatte (a2) angeordnet ist.

5. Antiballistische Platte nach Anspruch 1, die mindestens eine Schicht aus einer Bewehrung (e), angeordnet auf dem Boden der Baubodenplatte (a1), aufweist.

6. Antiballistische Platte nach Anspruch 5, wobei die mindestens eine Schicht der Bewehrung (e) einen Bewehrungsstahl oder gehärteten Stahl aufweist.

7. Antiballistische Platte nach Anspruch 1, die mindestens eine Schicht aus einem keramischen Material (f) aufweist, die zwischen der Mehrzahl der Schichten des antiballistischen Bewehrungsgewebes und der Bauoberseitenplatte angeordnet ist.

8. Fahrzeug, das vordere Seitentüren und eine Motorhaube aufweist, wobei das Fahrzeug antiballistische Platten besitzt, die zumindest obere Teile der Motorhaube und die vorderen Seitentüren abdecken, wobei jede antiballistische Platte Anspruch 1 entspricht.

9. Verfahren zum Herstellen einer antiballistischen Platte, das die Schritte aufweist:
Anordnen mindestens eines ersten thermoplastischen Gewebes mit Verstärkungsfasern in einer Form (1), wobei das oder jedes thermoplastische Gewebe ein thermoplastisches Material aufweist;
Anordnen einer ersten Klebedichtfolie (b1) über dem mindestens einen Gewebe, wobei die erste Klebefolie aus einem thermoplastischen Material gebildet ist, das im Wesentlichen nicht mit dem thermoplastischen Material des thermoplastischen Gewebes mischbar ist;
Anordnen abwechselnder Schichten aus antiballistischem Bewehrungsgewebe (c) und thermoplastischen Zwischenklebefolien oder -netzen (d) über der ersten Klebedichtfolie, wobei die thermoplastischen Zwischenklebefolien oder -netze weniger als 20 % des kombinierten Gewichts der thermoplastischen Zwischenklebefolien oder -netze und des antiballistischen Bewehrungsgewebes bilden;
Anordnen einer zweiten Klebedichtfolie (b2) über der Mehrzahl der Schichten des antiballistischen Bewehrungsgewebes, wobei die zweite Klebefolie aus einem thermoplastischen Material gebildet ist; und
Anordnen mindestens eines zweiten thermoplastischen Gewebes mit Verstärkungsfasern über der zweiten Dichtfolie, wobei das oder jedes zweite thermoplastische Gewebe ein thermoplastisches Material aufweist, mit dem das thermoplastische Material der zweiten Klebedichtfolie im Wesentlichen nicht mischbar ist,
um so eine gesamte Anordnung in der Form zu bilden,
wobei das Verfahren die weiteren Schritte aufweist:
Anordnen eines Vakuumsacks (2) über der gesamten Anordnung und Evakuieren der gesamten Anordnung;
Ausheizen der gesamten Anordnung so,
dass das thermoplastische Material des mindestens einen ersten thermoplastischen Gewebes schmilzt und die Verstärkungsfasern, die zusammen damit angeordnet sind, imprägniert, um so eine Baubodenplatte (a1) zu bilden;
dass das thermoplastische Material des mindestens einen zweiten thermoplastischen Gewebes schmilzt und die Verstärkungsfasern, die zusammen damit angeordnet sind, imprägniert, um so eine Bauoberseitenplatte (a2) zu bilden; und
dass die thermoplastischen Zwischenklebefolien oder -netze schmelzen, um die Schichten des antiballistischen Bewehrungsgewebes zu verbinden; und
wobei die gesamte Anordnung so gekühlt wird, dass das Thermoplast in der Baubodenplatte (a1) und der Bauoberseitenplatte (a2) gehärtet wird und die jeweiligen Verstärkungsfasern verbindet,
um so die gesamte Anordnung zu konsolidieren.

10. Verfahren nach Anspruch 9, das weiterhin den Schritt eines Aufbringens mindestens einer Schicht aus keramischem Material (f) auf der Oberseite der Bauoberseitenplatte (a2) aufweist.

11. Verfahren nach Anspruch 9, das weiterhin den Schritt eines Aufbringens mindestens einer Schicht einer Bewehrung (e) auf dem Boden der Baubodenplatte (a1) aufweist.

12. Verfahren nach Anspruch 11, wobei der Schritt eines Aufbringens mindestens einer Schicht einer Bewehrung (e) ein Aufbringen mindestens einer Schicht aus Bewehrungsstahl oder gehärtetem Stahl aufweist.

13. Verfahren nach Anspruch 9, das weiterhin den Schritt eines Anordnens mindestens einer Schicht aus keramischem Material (f) über den abwechselnden Schichten aus antiballistischem Bewehrungsgewebe (c) und thermoplastischen Zwischenklebefolien oder -netzen (d) vor einem Anordnen des mindestens einen zweiten thermoplastischen Gewebes mit Verstärkungsfasern über der zweiten Dichtfolie (b2) aufweist.

## Revendications

1. Panneau antimissile comprenant:
une plaque (a1) structurelle de fond fabriquée en un matériau thermoplastique contenant des fibres d'armature;
une pluralité de couches de tissu (c) de blindage antimissile; et
une plaque (a2) structurelle supérieure fabriquée en un matériau thermoplastique contenant des fibres d'armature,
**caractérisé en ce que** le panneau comprend en outre:
des feuilles ou filets (d) adhésifs intermédiaires en matériau thermoplastique alternant avec les couches de tissu de blindage antimissile et les faisant adhérer, les feuilles ou filets adhésifs intermédiaires thermoplastique constituant moins de 20% du poids combiné des feuilles ou filets adhésifs intermédiaires thermoplastique et du tissu de blindage antimissile;
une première feuille (b1) adhésive d'étanchement, prévue entre la plaque structurelle de fond et la pluralité de couches de tissu de blindage antimissile, la première feuille adhésive étant fabriquée en un matériau thermoplastique qui est en substance non-mixable avec le matériau thermoplastique dont est fabriquée la plaque structurelle de fond; et
une seconde feuille (b2) adhésive d'étanchement, prévue entre la pluralité de couches de tissu de blindage antimissile et la plaque structurelle supérieure, la seconde feuille adhésive étant fabriquée en un matériau thermoplastique qui est en substance non-mixable avec le matériau thermoplastique dont est fabriquée la plaque structurelle supérieure.

2. Panneau antimissile selon la revendication 1, dans lequel le matériau thermoplastique comprend du PP ou du PET.

3. Panneau antimissile selon la revendication 1 ou la revendication 2, dans lequel les fibres d'armature sont faites de verre, de carbone ou d'un aramide.

4. Panneau antimissile selon la revendication 1, comprenant au moins une couche de matériau (f) céramique située au-dessus de la plaque (a2) structurelle supérieure.

5. Panneau antimissile selon la revendication 1, comprenant au moins une couche de blindage (e) située en dessous de la plaque (a1) structurelle de fond.

6. Panneau antimissile selon la revendication 5, dans lequel la couche au moins présente de blindage (e) comprend de l'acier de blindage ou de l'acier trempé.

7. Panneau antimissile selon la revendication 1, comprenant au moins une couche de matériau (f) céramique située entre la pluralité de couches de tissu de blindage antimissile et la plaque structurelle supérieure.

8. Automobile comprenant des portes latérales avant et un capot moteur, l'automobile ayant des panneaux antimissiles recouvrant au moins les parties supérieures du capot moteur et les portes latérales avant, chaque panneau antimissile correspondant à la revendication 1.

9. Procédé de production d'un panneau antimissile comprenant les étapes consistant à:
disposer au moins un premier tissu thermoplastique ayant des fibres d'armature dans un moule (1), le ou chaque premier tissu thermoplastique comprenant un matériau thermoplastique;
disposer une première feuille (b1) adhésive d'étanchement au dessus du tissu au moins présent, la première feuille adhésive étant fabriquée en un matériau thermoplastique qui est en substance non-mixable avec le matériau thermoplastique du tissu thermoplastique;
disposer en alternance des couches de tissu (c) de blindage antimissile et des feuilles ou des filets (d) adhésifs intermédiaires en thermoplastiques au-dessus de la première feuille adhésive d'étanchement, les feuilles ou filets adhésifs intermédiaires en thermoplastique constituant moins de 20% du poids combiné des feuilles ou filets adhésifs intermédiaires en thermoplastique et du tissu de blindage antimissile;
disposer une seconde feuille (b2) adhésive d'étanchement, au-dessus de la pluralité de couches de tissu de blindage antimissile, la seconde feuille adhésive étant fabriquée en un matériau thermoplastique; et
disposer au moins un second tissu thermoplastique ayant des fibres d'armature au-dessus de la seconde feuille d'étanchement, le ou chaque second tissu thermoplastique comprenant un matériau thermoplastique avec lequel le matériau thermoplastique de la seconde feuille adhésive d'étanchement est en substance non-mixable,
de manière à constituer un agencement complet dans le moule,
le procédé comprenant les étapes complémentaires consistant à:
disposer une enveloppe (2) à dépression par-dessus l'agencement complet et mettre en dépression l'agencement complet;
faire cuire au four l'agencement complet de sorte que:
le matériau thermoplastique du premier tissu thermoplastique au moins présent fonde et imprègne les fibres d'armature y agencées pour former une plaque (a1) structurelle de fond;
le matériau thermoplastique du second tissu thermoplastique au moins présent fonde et imprègne les fibres d'armature y agencées pour former une plaque (a2) structurelle supérieure; et
les feuilles ou filets adhésifs intermédiaires en thermoplastique fondent pour faire adhérer les couches de tissu de blindage antimissile; et
refroidir l'agencement complet de sorte que le thermoplastique dans la plaque (a1) structurelle de fond et dans la plaque (a2) structurelle supérieure soit durci et fasse adhérer les fibres d'armature respectives,
de manière à consolider l'agencement complet.

10. Procédé selon la revendication 9, comprenant en outre l'étape consistant à déposer au moins une couche de matériau (f) céramique au-dessus de la plaque (a2) structurelle supérieure.

11. Procédé selon la revendication 9, comprenant en outre l'étape consistant à déposer au moins une couche de blindage (e) en dessous de la plaque (a1) structurelle de fond.

12. Procédé selon la revendication 11, dans lequel l'étape consistant à déposer au moins une couche de blindage (e) comprend le fait de déposer au moins une couche d'acier de blindage ou d'acier trempé.

13. Procédé selon la revendication 9, comprenant en outre l'étape consistant à agencer au moins une couche de matériau (f) céramique au-dessus des couches en alternance de tissu (c) de blindage antimissile et des feuilles ou filets (d) adhésifs intermédiaires en thermoplastique, avant d'agencer le second tissu thermoplastique au moins présent ayant des fibres d'armature au-dessus de la seconde feuille (b2) d'étanchement.
